(19) **Europäisches Patentamt European Patent Office Office européen des brevets**

(11) **EP 1 550 340 B1**

(12) **EUROPEAN PATENT SPECIFICATION**

(45) Date of publication and mention
of the grant of the patent:
**20.02.2008 Bulletin 2008/08**

(21) Application number: **03791060.1**

(22) Date of filing: **28.08.2003**

(51) Int Cl.:
*H04Q 7/38* (2006.01)

(86) International application number:
**PCT/GB2003/003777**

(87) International publication number:
**WO 2004/021727 (11.03.2004 Gazette 2004/11)**

(54) **METHOD OF OPERATING A TELECOMMUNICATIONS SYSTEM**

VERFAHREN ZUM BETRIEB EINES TELEKOMMUNIKATIONSSYSTEMS

PROCEDE D'UTILISATION D'UN SYSTEME DE TELECOMMUNICATIONS

(84) Designated Contracting States:
**DE FR GB IT**

(30) Priority: **28.08.2002 GB 0219978**

(43) Date of publication of application:
**06.07.2005 Bulletin 2005/27**

(73) Proprietor: **THE UNIVERSITY COURT OF THE UNIVERSITY OF EDINBURGH Edinburgh EH8 9YL (GB)**

(72) Inventors:
• **LEE, Yeonwoo Edinburgh EH9 3DN (GB)**
• **MCLAUGHLIN, Stephen Edinburgh EH15 2QS (GB)**

(74) Representative: **Hanson, William Bennett et al Bromhead Johnson 19 Buckingham Street London WC2N 6EF (GB)**

(56) References cited:
EP-A- 0 750 440          WO-A-00/49824
WO-A-98/24199          WO-A-99/44305

• SAMPATH A ET AL: "POWER CONTROL AND RESOURCE MANAGEMENT FOR A MULTIMEDIA CDMA WIRELESS SYSTEM" IEEE INTERNATIONAL SYMPOSIUM ON PERSONAL, INDOOR AND MOBILE RADIO COMMUNICATIONS, XX, XX, January 1995 (1995-01), pages 21-25, XP000985181 cited in the application
• JORGUSESKI L ET AL: "RADIO RESOURCE ALLOCATION IN THIRD-GENERATION MOBILE COMMUNICATION SYSTEMS" IEEE COMMUNICATIONS MAGAZINE, IEEE SERVICE CENTER. PISCATAWAY, N.J, US, vol. 39, no. 2, 1 February 2001 (2001-02-01), pages 117-123, XP001006743 ISSN: 0163-6804 cited in the application
• OLOFSSON H ET AL: "IMPROVED INTERFACE BETWEEN LINK LEVEL AND SYSTEM LEVEL SIMULATIONS APPLIED TO GSM" 1997 IEEE 6TH. INTERNATIONAL CONFERENCE ON UNIVERSAL PERSONAL COMMUNICATIONS RECORD. SAN DIEGO, 12 - 16TH. OCT. 1997, IEEE INTERNATIONAL CONFERENCE ON UNIVERSAL PERSONAL COMMUNICATIONS, NEW YORK, IEEE, US, vol. 1 CONF. 6, 12 October 1997 (1997-10-12), pages 79-83, XP000871712 ISBN: 0-7803-3777-8 cited in the application

## Description

Background to the Invention

This invention relates to a method of operating a wireless telecommunications system.

The rapidly growing demand for multi-media services over wireless communication systems has accelerated a need for more efficient utilization of the scarce and expensive wireless resource. In addition, it is important with future differentiated services to be delivered via mobile networks should be adaptable in terms of resource estimation, utilization and allocation. In next generation wireless communication systems the optimization of resource use in the radio resource management (RRM) will be a key driver. This optimization can only be made possible with the development and adoption of efficient algorithms. Current RRM functionality in 2G and 3G systems acts from the network layer down to the data link and physical layer. Thus the wireless physical resources are utilized directly without intermediate layers. Future RRM in next generation networks will be much more complex. Therefore, research work incorporating an RRM that takes account of the conditions of the physical layer resources suggests the need to focus on its potential impact in the intermediate layer, i.e. radio resource metric estimation (RME), which can be aware of the multiple layer capabilities and states. Based on the knowledge of the desired loads and channel and radio resources, the RRM in cooperation with RME can manage both up and down the protocol stack. Thus, it can decide and control the parameters and functions required to optimize the desired features such as QoS, throughput, power utilization and overall system capacity.

Resource metric estimation (RME) is a crucial part of the radio resource allocation (RRA) algorithm that performs call admission control (CAC), resource scheduling and power/rate scheduling tasks, which provide the following control tasks:

1) The radio channel characteristics and session quality requirements are used for optimal power and rate allocation;
2) The current channel load, characteristics and quality requirements are used for controlling the resource scheduler.
See L. Jorguseski et al, "Radio Resource Allocation in Third-Generation Mobile Communication Systems," IEEE Communications Magazine, pp. 117-123, Feb. 2001.

With built-in capacity models, the RME assists the CAC in accepting or rejecting new sessions. The question of how to combine the interference measurements with the current load situation and QoS requirements of the existing traffic classes to control the CAC, or channel allocation is a very interesting issue. Thus, the most appropriate resource metrics permit efficient inter-working between the physical layer and higher layers in the protocol stack and thus it is essential to optimize the overall system performance.

The current method of assessing resource metric is to use link quality information in a long-term averaged manner. Current resource management uses this information in 2G and 3G systems and works from the network layer down to the data link and physical layer without any intermediate layers (R. Berezdivin et al., "Next-Generation Wireless Communication Concepts and Technologies", IEEE Communication Magazine, pp. 108-116, Mar. 2002). If the functionality of the RMMF is assumed as similar to that of the interface between the link level and the system level simulations, this has been exemplified by an interface applied to a GSM system in H. Oloffson et al, "Improved Interface between Link Level and System Level Simulation Applied to GSM," Proceedings of IEEE ICUPC '97, pp. 79-83, Aug. 1997 and S. Hamalainen et al, "A Novel Interface between Link and System Level Simulations," Proceedings of ACTS Summit 1997, Aalborg, Denmark, pp. 506-604, Oct. 1997.

The importance and functionality of RME is defined and described briefly incorporating with resource management function by Jorgueski et al (supra), and the concepts of smart resource and spectrum allocation, and utilization in next generation wireless communications are introduced and described by Hamalainen et al (supra).

However, there are still problems in implementing RME in practical wireless networks.

Summary of the Invention

It is an aim of the invention to provide efficient multi-layer inter-working using the resource metrics mapping function (RMMF). It is a further aim of the invention to provide a radio resource metric region (RMR) to give an acceptable resource region where QoS and acceptable link quality can be guaranteed with an achievable resource margin to be utilized in terms of code/time/frequency resource unit.

The invention enables efficient utilizing and monitoring in resource usage using the interface between link level and system level simulations approach which allows dynamic resource metric estimation, such that the current channel load conditions and resource pool condition can be achieved in a non-averaged manner.

The present invention provides a method of operating a time division duplex based wireless communications system according to claim 1 and a base station according to claim 10. The method comprises the steps of establishing, at the base station, a resource metrics mapping function (RMMF); deriving from said RMMF, from both the mean value and standard deviation of the received signal to interference ratio (SIR) for all users, and from estimates of channel load conditions and interference levels, a Resource Metric Region (RMR) showing the number of users experiencing acceptable quality of service; and deciding, on the basis of the RMR, whether to admit a newly arriving call.

Preferred or optional features of the invention are defined in the dependent claims.

Brief Description of the Drawings

The invention will now be described in more detail, by way of example only, with reference to the accompanying drawings, in which:

Figure 1 is a block diagram of an RMMF procedure;

Figure 2 is a graph showing the RMMF as a function of mean and standard deviation of burst SIR;

Figure 3 is a block diagram showing resource metric estimation;

Figure 4 is a graph showing maximum number of users with different data rates;

Figure 5 is a graph showing the maximum aggregated data rate for different data rate services; and

Figure 6 is a graph of degree of confidence level.

Detailed Description of the Preferred Embodiments

**Radio Resource Mapping Function (RMMF)**

The procedure of the RMMF can be summarized by the following three stages:

1) channel characterization on a burst-by-burst basis,;

2) extracting burst information from link level; and

3) estimating link quality which can be raw BER, block error rate, or frame error rate.

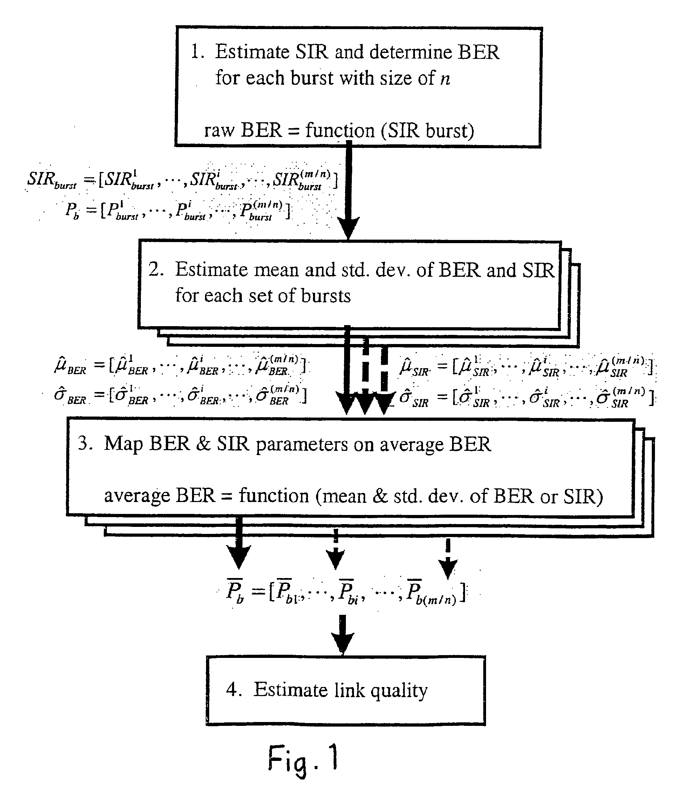

The procedure for this concept is depicted in Figure 1, where the parameters $n$ and $m$ are the number of measured signal to interference ratio (SIR) in a burst and number of bursts for a specific traffic call, respectively. The SIR can be defined by $SIR = G \cdot E_b/I_o$ where $G$ is the processing gain and $E_b/I_o$ is given at Equation (2). The mapping method comprises the following steps:

- Measure a sequence of burst SIR values and determine $P^i_{burst}$ for each burst i by means of the mapping function: *raw BER = function (burst SIR).*

- Estimate the average raw BER $(\hat{\mu}^i_{BER})$ and the average SIR $(\hat{\mu}^i_{SIR})$ for each set of bursts and each standard deviation of the BER values $(\hat{\sigma}^i_{BER})$ and the SIR values $(\hat{\sigma}^i_{SIR})$.

- Map each parameter pair $(\hat{\mu}^i_{BER}, \hat{\sigma}^i_{BER})$ or $(\hat{\mu}^i_{SIR}, \hat{\sigma}^i_{SIR})$ on the average BER $\overline{P}_{bi}$ using the link level results and estimate link quality of each segment by using obtained sequence of $\overline{P}_{bi}$.

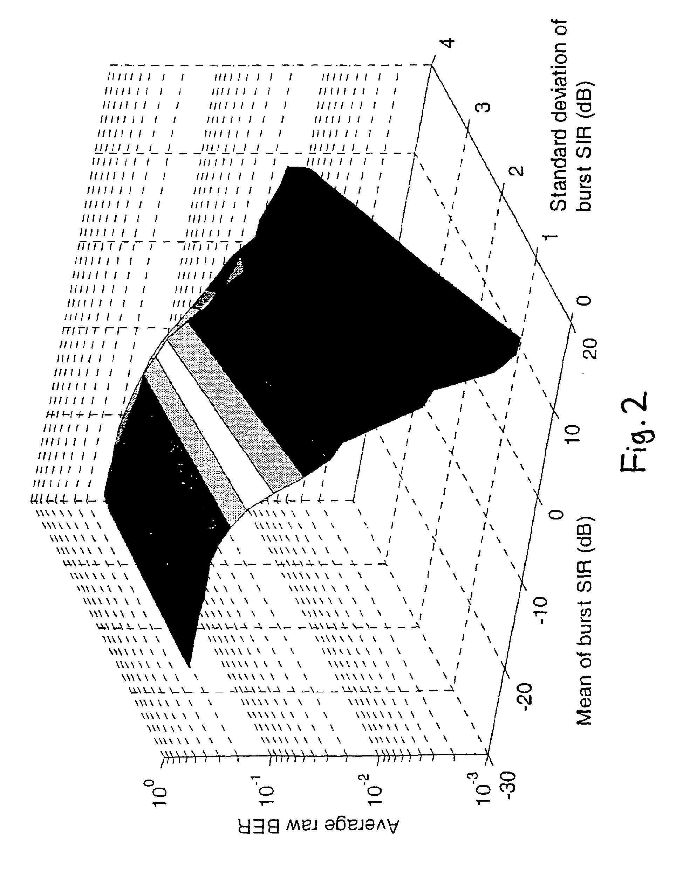

A computer simulation has been developed to establish the basis of the RMMF and evaluate the multirate transmission in a non-real time WWW traffic service scenario as in the ETSI Technical Report, "Selection procedures for the choice of radio transmission technologies of the UMTS," TR 101 112 v. 3.2.0, April 1998, assuming a TDD-CDMA system model. For multirate transmission operations, multicode and multislot allocation have been considered. These can be achieved by either pooling multiple codes within one time slot or pooling of multiple time slots respectively. The simulation result shows that the average raw BER as a function of mean and standard deviation of burst SIR can be obtained as shown in Figure 2. It should be noticed that the average raw BER is influenced not only by the mean burst quality but also the standard deviation. This 3-D figure presents the RMMF, in that it demonstrates the actual link quality according to SIR values representing channel load and standard deviation implying code availability at a current resource pool.

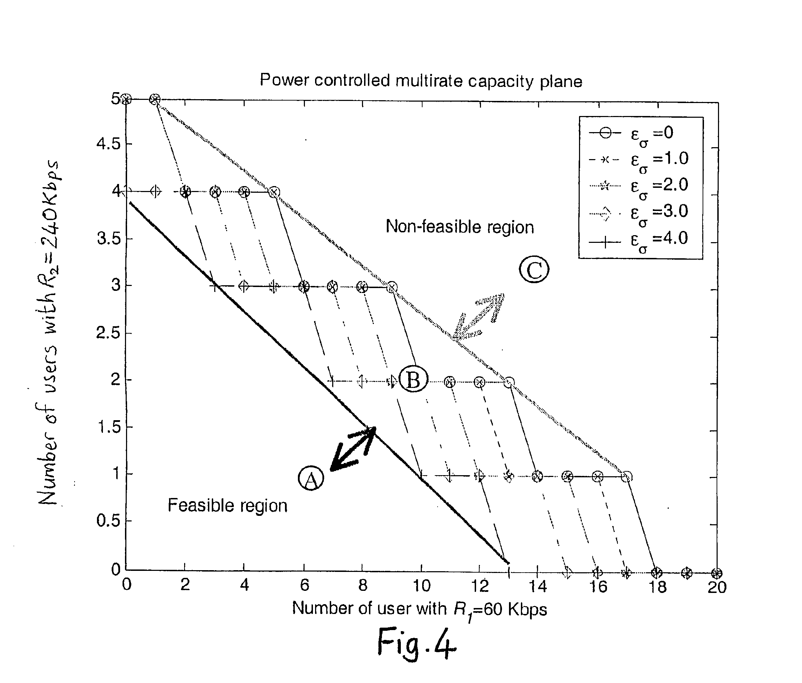

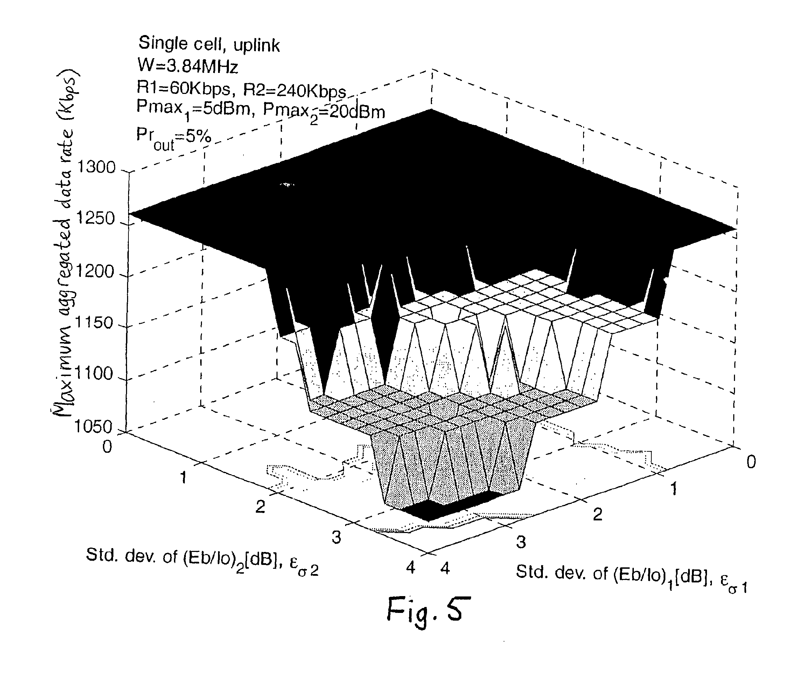

As described below, the availability of the current resource pool can be regarded as an available number of users that the system can support. As shown in Figures 4 and 5, the higher the variation of SIR, the less available the maximum capacity (and hence the smaller available resource pool).

Since the conventionally measured average SIR sample does not fully reflect the perceived dynamic link quality for users, a certain average SIR may result in very different user link quality. However, by using this kind of RMMF, the link quality in terms of average raw BER observed by a user can be determined very accurately, and furthermore accurate and fast inter-working between link level and system level can be achieved. In higher layers, this mapping function can be used as a resource look-up table having actual radio mobile channel and interference characteristics and as a monitor of resource availability or efficiency.

### Radio RME with Predictive Radio Resource Metric Region (RMR) Method

We have developed a radio resource metric estimation method for TDD-based wireless communication systems. The method offers flexibility, adaptability and maximization of radio resource utilization based on predictive and acceptable radio resource metric region (RMR) in which guaranteed QoS and link quality can be assured. In aggregated traffic, the estimation of available resource can be either optimistic or conservative due to inaccurate link quality information and the coarse estimation of overflow traffic, and thus all the resource units cannot be exploited. If we know the resource availability, i.e. the required total average resource plus the excess resource which cannot be utilized because of a stringent call admission criterion, then this information allows the acceptable resource metric region to be established on a call basis or a specific packet-length basis, thus enabling resource allocation algorithm to maximize the resource utilization.

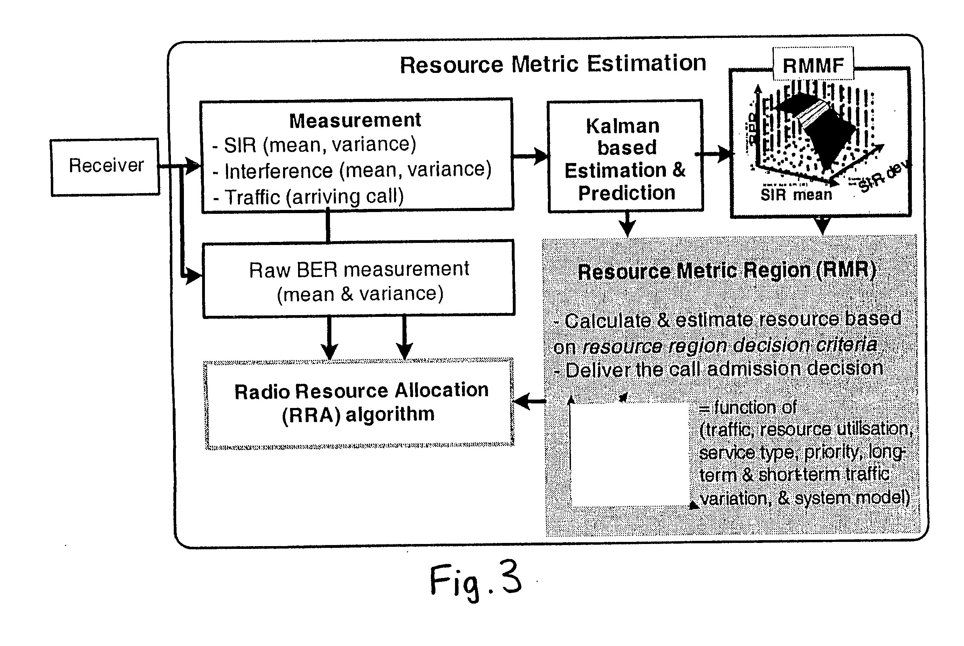

One possible approach for this concept is depicted in Figure 3, where the measurement of SIR and traffic followed by a Kalman based prediction is performed. This provides some measured or predicted resource parameters for the resource scheduler to search for the current position on the surface of the RMMF and to deliver the actual status of the resource usage. All of these are integrated in establishing RMR in which the calculation and estimation of resource availability are performed based on the resource region decision criteria and help the call admission decision on a call basis or a packet-length basis. This RMR should be modified and adjusted for time varying traffic channel and dynamic load conditions.

Furthermore, combined with adaptive modulation and power control, or rate control and power control, the RMR becomes a crucial decision parameter. Because of the fact that these techniques are still dependent on averaged or stringent link quality information, the resource availability becomes more uncertain and changeable and leaves a significant useful resource margin which can be exploited, even though these techniques are trying to achieve maximal resource utilization.

Conventionally, CDMA system capacity is estimated by the average received SIR (or $E_b/I_o$), which leads to an incorrect capacity estimation due to the neglect of the second order statistics of the SIR. In a multimedia wireless CDMA system, the maximum number of user can be achieved by the following inequality and the conditions in A. S. Sampath, P. 5. Kumar, and J. M. Holtzman, "Power control and resource management for a multimedia CDMA wireless system," in Proc. IEEE PIMRC '95, 1995, assuming the existence of the optimal power level for each user.

$$\sum_{j=1}^{K} \frac{\varepsilon_j}{\varepsilon_j + G_j} + \frac{\eta_0 W}{\min_{1 \le i \le K}\left[ P_{\max,i} h_i \dfrac{\varepsilon_i + G_i}{\varepsilon_i} \right]} < 1 \qquad (1)$$

where $W$ is the system bandwidth, $G_j$ is the processing gain of the user, the channel coefficient $h_j$ accounts for the combined effects of path loss and shadowing, and $\eta_0$ is the noise spectral density. $K$ is the total number of mobile users admitted to the system, which is the total of each user's supporting corresponding data rate classes $K = \sum_{i=1}^{N} K_i$,

where N is the total data rate of all classes of services. $\varepsilon_j$ is the required $E_b/I_o$ for the $i$-th user, which is defined by

$$\varepsilon_i = \frac{G_i h_i P_i}{\sum_{j \neq i}^{K} h_j P_j + \eta_0 W} \qquad (2)$$

The maximum number of supportable users $K$ is determined by the predefined outage probability, which is set in this example to 0.05 and is defined by

$$P_{out} = \Pr\left( \sum_{j=1}^{K} \frac{\varepsilon_j}{\varepsilon_j + G_j} + \frac{\eta_0 W}{\min_{1 \leq i \leq K}\left[ P_{max,i} h_i \frac{\varepsilon_i + G_i}{\varepsilon_i} \right]} \geq 1 \right) = 0.05 \qquad (3)$$

where each terminal i is power-limited by $P_{max,i}$, then

$$0 < P_i = \frac{\eta_0 W \dfrac{\varepsilon_i}{\varepsilon_i + G_i}}{h_i\left( 1 - \sum_{j=1}^{K} \dfrac{\varepsilon_j}{\varepsilon_j + G_j} \right)} \leq P_{max,i} \,\forall i \qquad (4)$$

As shown in Figure 4, the theoretical maximum available number of user pair ($K_1$, $K_2$) with different data rates and QoS requirements (or the predefined $E_b/I_o$ requirement) is significantly dependent on the variance of $E_b/I_o$, caused by systematic error such as inaccurate power control, traffic variation and fading. In Figure 4, we assume a single cell and uplink model having spreading bandwidth, W=3.84MHz, supporting two data rate services ($R_1$, $R_2$) = (60,240) Kbps with different required $E_b/I_c$, i.e. 5.0 dB and 5.5 dB, respectively, and the maximum allowable powers ($P_{max1}$, $P_{max2}$) to each two data group users is set to 5 dBm and 20 dBm. The noise spectral density is assumed as -174 dBm/Hz.
If the systematic error is increased, then the maximum available number of users in a system is dramatically reduced as shown in Figures 4 and 5. Thus, it is necessary to consider the variance of the received $E_b/I_o$ (or SIR, because this is easily converted to SIR) along with the possible maximum capacity margin according to the situation. Note that due to the higher variance of the $E_b/I_o$ the maximum capacity decreases, as do the capacity margin and resource availability. For an estimation of the maximum available number of users and available resource margin, both the received $E_b/I_o$ and the variance of $E_b/I_o$ have to be taken into account.

**Resource Metric Estimation and Admission with RMMF**

In order to explain the practical procedure of resource metric estimation and admission with RMMF (in Figures 1 and 2) and the RMR concept (in Figure 3), let us begin at point Ⓐ, Ⓑ and Ⓒ as shown in Figure 4.
This procedure can be summarized as follows:

1) From the RMMF procedure as explained above (in Figure 1), the base station (BS) measures the received SIR (or $E_b/I_o$) and delivers the mean value and standard deviation of received SIR.

2) Based on this information, the BS can estimate the current channel load condition and interference level. Then, the users satisfying the $E_b/I_o$ requirement can be selected from the aggregated received signal.

3) When the number of users satisfying QoS requirement is determined based on 2), this should be a set of three capacity regions: Ⓐ, feasible region; Ⓑ negotiable region; Ⓒ, non-feasible region.

4) From the analytical expression, Equation (1), the system knows the maximum available number of users according to the variation of $E_b/I_o$. For example, in Figure 4 the maximum upper limit is MUL and the maximum lower limit is MLL if the maximum possible standard deviation of $E_b/I_o$ is assumed to be 4.0 dB. The MUL is the optimistic capacity limit and the MLL is the too stringent capacity limit at the conventional call admission control algorithm. The call admission control algorithm based on this limit has a hard capacity limit or a hard admission decision criterion. These two theoretical capacity limits can be calculated by Equation (1).

Let the left side of Equation (1) be rewritten as

$$f(\varepsilon, \mathrm{h}, \mathrm{G}) < 1 \rightarrow \left( K_{MUL}, K_{MLL} \right) \tag{5}$$

where $\varepsilon = [\varepsilon_1,..., \varepsilon_K]$ is the $E_b/I_o$ vector, $\mathbf{h} = [h_1,..., h_K]$ is the channel coefficient vector, and $\mathbf{G} = [G_1 ,..., G_K]$ is the processing gain vector. $K_{MUL}$ is the maximum upper limit and $K_{MLL}$ is the maximum lower limit. As a result of the procedure in Figure 3, we can obtain the measured $E_b/I_o$, $\widetilde{\varepsilon}_i$, at the measurement block. Based on this value and step 1), we can measure and estimate the available number of users $\widetilde{K}$ in the current system state. Depending on Equation (1), the newly arriving call is accepted or rejected.

If $f(\varepsilon, \mathrm{h}, \mathrm{G}) < 1$, then this system state is accepted, i.e. all the users in the current state are being served. Otherwise, some users' calls can be rejected. However, this is a quite conventional decision rule.

Therefore, herein, we introduce a modified rule, which is dependent on the standard deviation of capacity and the degree of confidence of capacity that can be derived from the standard deviation of $E_b/I_o$. First, we define the difference of capacity limits, $\Delta K_{MUL} = K_{MUL} - \widetilde{K}$ and $\Delta K_{MLL} = K_{MLL} - \widetilde{K}$. After Kalman prediction in Figure 3, we can obtain the predicted $E_b/I_o$ vector, $\hat{\varepsilon} = [\hat{\varepsilon}_1,...,\hat{\varepsilon}_K]$, the standard deviation of the $E_b/I_o$ vector, $\hat{\varepsilon}_\sigma = [\hat{\varepsilon}_{\sigma,1},...,\hat{\varepsilon}_{\sigma,K}]$, and can predict the available number of users $\widetilde{K}$ with a variance $\Delta\widetilde{K}$, which can be written as

$$\widetilde{K} = \widetilde{K} \pm \Delta\widetilde{K} = \widetilde{K} \pm \Delta f\left( \hat{\varepsilon}, \hat{\varepsilon}_\sigma, \hat{\mathrm{h}}, \hat{\mathrm{G}}, c \right) \tag{6}$$

where $\Delta f(\hat{\varepsilon}, \hat{\varepsilon}_\sigma, \hat{\mathrm{h}}, \hat{\mathrm{G}}, c)$ is the capacity variation or the capacity difference which can be derived by the Kalman prediction parameters such as $\hat{\varepsilon}, \hat{\varepsilon}_\sigma, \hat{\mathrm{h}}, \hat{\mathrm{G}}$, and the coefficient derived from the normalized Gaussian distribution, $c$. Thus, $\Delta\widetilde{K}$ is the variance of the available number of users either increased or decreased by the Kalman prediction, which is subject to the time-varying traffic variation caused by arriving or departing users. This can be calculated straightforwardly from the capacity estimation equation, that is

$$\Delta\widetilde{K} = \widetilde{K}\left( \frac{\langle c \cdot E\{\widetilde{\varepsilon}_\sigma\}\rangle}{\langle c \cdot E\{\widetilde{\varepsilon}_\sigma\}\rangle + 1} \right) \tag{7}$$

where $\langle \cdot \rangle = 10^{(\cdot)/10}$ and $E\{\cdot\}$ is the expectation value. If the multirate services are taken into account in this equation, each expectation value of the standard deviation corresponding to the respective data rate service should be calculated and the estimated number of users for that data rate should be summed.

Next, we introduce the degree of confidence level (DCL) of users according to the above description. The DCL can be defined as the capacity status by deciding the safe distance from the optimistic capacity limit (i.e. MUL) and the pessimistic capacity limit (i.e. MLL). This can be defined as follows:

IF $\widetilde{K} \in (A)$ AND $\hat{K} \in (A)$

$$DCL = 1 \qquad \text{①}$$

ELSEIF $\widetilde{K} \in (A)$ AND $\hat{K} \notin (A)$

IF $(\Delta\widetilde{K} \geq \Delta K_{MLL})$ and $(\Delta\widetilde{K} < \Delta K_{MUL})$,

$$DCL = 1 - \alpha\left(\frac{\Delta\widetilde{K}}{\Delta K_{MUL}}\right) + C \qquad \text{②}$$

where a(S) is a monotonously increasing function decided by empirical approach, which can be a log-sigmoid function or a hyperbolic tangent function. $C$ is the constant.

ELSEIF ($\Delta \widetilde{K} \geq \Delta K_{MLL}$) and ($\Delta \widetilde{K} \geq \Delta K_{MUL}$),

$$DCL = 0 \qquad ③$$

(this call is queued and awaiting the next stage with high priority.)

END

ELSEIF $\widetilde{K} \in$ (B) AND $\hat{K} \in$ (A)

IF ($\Delta \widetilde{K} \geq \Delta K_{MLL}$) and ($\Delta \widetilde{K} < \Delta K_{MUL}$),

$$DCL = 1 - \frac{\beta \cdot \Delta \widetilde{K}}{\Delta K_{MUL}} \qquad ④$$

where $\beta$ is a positive coefficient, $0 < \beta \leq 1/2$.

ELSEIF ($\Delta \widetilde{K} \geq \Delta K_{MLL}$) and ($\Delta \widetilde{K} \geq \Delta K_{MUL}$),

$$DCL = 1 - \frac{\gamma \cdot \Delta \widetilde{K}}{\Delta K_{MUL}} \qquad ⑤$$

where $\gamma$ is a positive coefficient, $1/2 < \gamma \leq 1$.

END

$$\text{ELSEIF } \widetilde{K} \in (B) \text{ AND } \hat{K} \in (B)$$

$$DCL = 1 - \frac{\left(\Delta K_{MLL} - \Delta \widetilde{K}\right)}{\left(\Delta K_{MUL} - \Delta K_{MLL}\right)} \qquad \text{⑥}$$

$$\text{ELSEIF } \widetilde{K} \in (B) \text{ AND } \hat{K} \in (C)$$

$$DCL = 0 \qquad \text{⑦}$$

$$\text{ELSEIF } \widetilde{K} \in (C) \text{ AND } \hat{K} \in (B)$$

$$DCL = \frac{\Delta \widetilde{K}}{\left(\Delta K_{MUL} - \Delta K_{MLL}\right)} \qquad \text{⑧}$$

$$\text{ELSEIF } \widetilde{K} \in (C) \text{ AND } \hat{K} \in (C)$$

$$DCL = 0 \qquad \text{⑨}$$

END

5) At the region Ⓐ, i.e. inside the feasible capacity region, all the detected users can be supported in the system since their QoS are guaranteed. At the region Ⓒ outside the maximum available capacity limit, i.e. in the non-feasible region, almost all the users in this region should await their turn. The region Ⓑ between the feasible and the non-feasible region, indicates that even though there are some users satisfying the QoS requirement, the system cannot accept these users because it cannot provide a reliable traffic channel to them.

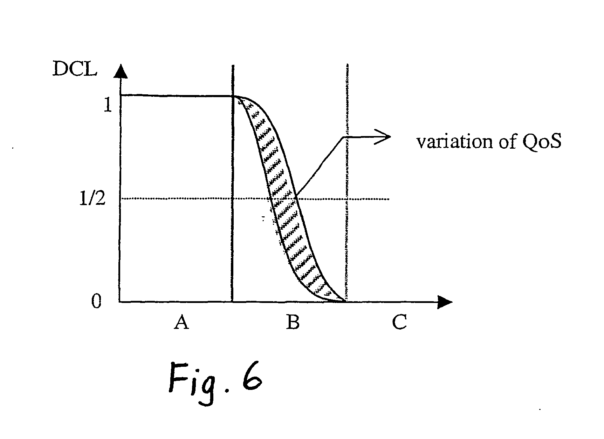

Consequently, this DCL and predicted capacity can be converted into the resource unit, since all the possible resource units such as code unit, time slot unit and frequency unit can be directly related to the data rate and its corresponding processing gain. Thus, the DCL procedure as described above performs adaptive call admission control, taking the capacity and resource availability in an adaptive and predictive manner. This DCL can be depicted as shown in Figure 6 where the degree of confidence is heavily dependent on the $\Delta \widetilde{K}$, that is the variation of QoS requirement. Thus, this method has a functionality of adaptive QoS based admission control.

Moreover, for next generation wireless communication systems, the resource unit can be enlarged to frequency unit (multi-carrier system), spatial unit (multiple-input-multiple-output system) and virtual path unit (Ad-Hoc network). In such evolved systems, this concept performs the intermediate layer function so that high layers could obtain actual and adaptive information concerning the resource status of the link layer, and thus enable adaptively flexible radio resource allocation.

Whilst the invention may be dependent on the load behavior, traffic assumption and selected scenarios, the important point is that the invention enables radio resource management to be dynamic and adaptable to multimedia services in next generation wireless systems.

All forms of the verb "to comprise" used in this specification have the meaning "to consist of or include".

**Claims**

1. A method of operating a time division duplex based wireless communications system comprising the steps of establishing, at a base station, a resource metrics mapping function (RMMF); deriving from said RMMF, from both the mean value and standard deviation of the received signal to interference ratio (SIR) for all users, and from estimates of channel load conditions and interference levels, a Resource Metric Region (RMR) showing the number of users experiencing acceptable quality of service; and deciding, on the basis of the RMR, whether to admit a newly arriving call.

2. A method according to claim 1, wherein the step of derivng the RMR comprises Kalman prediction of an interference vector comprising a predicted interference value for each user.

3. A method according to claim 2, wherein the interference vector and the standard deviation thereof are used to predict an available number of users.

4. A method according to any preceding claim, wherein the RMR shows whether the experiencing acceptable quality of service is above or below a maximum upper limit and also whether said number is above or below a maximum lower limit.

5. A method according to claim 4, comprising establishing a degree of confidence level for users as a function of the distance of the total number of users from said maximum upper limit and of the distance of the total number of users from said maximum lower limit, and wherein the step of deciding whether to admit a newly arriving call comprises taking into account said degree of confidence level.

6. A method according to any preceding claim, wherein the RMMF is established on the basis of the mean and standard deviation of both the bit error rate (BER) and the SIR.

7. A method according to claim 6, wherein SIR values are measured as a sequence of burst values.

8. A method according to claim 7, wherein a BER value is determined for each SIR burst value as a function thereof.

9. A method according to claim 7 or 8, wherein link quality is estimated by mapping pairs of parameters, each pair comprising the mean and standard deviation of BER or SIR, onto the average BER.

10. A base station for use in a time division duplex based wireless communications system, the base station comprising means for establishing a resource metrics mapping function (RMMF); means for deriving from said RMMF, from both the mean value and standard deviation of the received signal to interference ratio (SIR) for all users, and from estimates of channel load conditions and interference levels, a Resource Metric Region (RMR) showing the number of users experiencing acceptable quality of service; and means for deciding, on the basis of the RMR, whether to admit a newly arriving call.

11. A base station according to claim 10, wherein the means for deriving the RMR comprises means for Kalman prediction of an interference vector comprising a predicted interference value for each user.

12. A base station according to claim 11, wherein the RMR shows whether the experiencing acceptable quality of service is above or below a maximum upper limit and also whether said number is above or below a maximum lower limit and the base station comprises means for establishing a degree of confidence level for users as a function of the distance of the total number of users from said maximum upper limit and of the distance of the total number of users from said maximum lower limit, and wherein the means for deciding whether to admit a newly arriving call comprises means taking into account said degree of confidence level.

**Patentansprüche**

1. Verfahren zum Betrieb eines auf Zeitduplex basierenden kabellosen Kommunikationssystems, umfassend die Schritte: Einrichten einer Resource-Metric-Abbildungsfunktion (RMMF) an einer Basisstation; Ableiten eines Resource-Metric-Bereichs (RMR) aus der besagten RMMF, und zwar sowohl aus dem Mittelwert und der Standardabweichung des empfangenen Signal-Stör-Verhältnisses (SIR) für alle Nutzer als auch aus Abschätzungen der Kanal-Auslastungsbedingungen und der Störpegel, wobei der RMR die Anzahl der Nutzer angibt, die eine annehmbare Dienstgüte erfahren; und Entscheiden auf Basis des RMR, ob ein neu eingehender Anruf angenommen wird.

2. Verfahren nach Anspruch 1, wobei der Schritt des Ableitens des RMR eine Kalman-Vorhersage eines Störvektors umfasst, welcher einen vorhergesagten Störwert für jeden Nutzer enthält.

3. Verfahren nach Anspruch 2, wobei der Störvektor und dessen Standardabweichung verwendet werden, um eine vorliegende Anzahl an Nutzern vorherzusagen.

4. Verfahren nach einem der vorhergehenden Ansprüche, wobei der RMR anzeigt, ob die Anzahl der eine annehmbare Dienstgüte erfahrenden Nutzer oberhalb oder unterhalb einer maximalen oberen Grenze liegt, und auch, ob die besagte Zahl oberhalb oder unterhalb einer maximalen unteren Grenze liegt.

5. Verfahren nach Anspruch 4, umfassend den Schritt des Einrichtens eines Vertrauenslevel-Grads für Nutzer als Funktion des Abstands der Gesamtnutzerzahl von besagter maximaler oberer Grenze und des Abstands der Gesamtnutzerzahl von besagter maximaler unterer Grenze, und wobei der Schritt des Entscheidens, ob ein neu eingehender Anruf angenommen werden soll, eine Berücksichtigung des besagten Vertrauenslevel-Grads umfasst.

6. Verfahren nach einem der vorangehenden Ansprüche, wobei die RMMF auf Basis der mittleren und der Standardabweichung sowohl der Bitfehlerrate (BER) als auch des SIR eingerichtet wird.

7. Verfahren nach Anspruch 6, wobei SIR-Werte als eine Folge von Burstwerten gemessen werden.

8. Verfahren nach Anspruch 7, wobei für jeden SIR-Burstwert als Funktion desselben ein BER-Wert bestimmt wird.

9. Verfahren nach Anspruch 7 oder 8, wobei die Verbindungsgüte durch das Abbilden von Parameterpaaren auf die durchschnittliche BER abgeschätzt wird, wobei jedes Paar die mittlere und die Standardabweichung der BER oder des SIR umfasst

10. Basisstation zur Verwendung in einem auf Zeitduplex basierenden kabellosen Kommunikationssystem, wobei die Basisstation umfasst: Mittel zum Einrichten einer Resource-Metric-Abbildungsfunktion (RMMF); Mittel zum Ableiten eines Resource-Metric-Bereichs (RMR) aus der besagten RMMF, und zwar sowohl aus dem Mittelwert und der Standardabweichung des empfangenen Signal-Stör-Verhältnisses (SIR) für alle Nutzer als auch aus Abschätzungen der Kanal-Auslastungsbedingungen und der Störpegel, wobei der RMR die Anzahl der Nutzer angibt, die eine annehmbare Dienstgüte erfahren; und Mittel, um auf Basis des RMR zu entscheiden, ob ein neu eingehender Anruf angenommen wird.

11. Basisstation nach Anspruch 10, wobei das Mittel zum Ableiten des RMR Mittel für eine Kalman-Vorhersage eines Störvektors umfasst, der einen vorhergesagten Störwert für jeden Nutzer enthält.

12. Basisstation nach Anspruch 11, wobei der RMR anzeigt, ob die Anzahl der eine annehmbare Dienstgüte erfahrenden Nutzer oberhalb oder unterhalb einer maximalen oberen Grenze liegt, und auch, ob die besagte Zahl oberhalb oder unterhalb einer maximalen unteren Grenze liegt, und wobei die Basisstation Mittel zum Einrichten eines Vertrauenslevel-Grads für Nutzer als Funktion des Abstands der Gesamtnutzerzahl von besagter maximaler oberen Grenze und des Abstands der Gesamtnutzerzahl von besagter maximaler unterer Grenze umfasst, und wobei das Mittel zum Entscheiden, ob ein neu eingehender Anruf angenommen werden soll, Mittel umfasst, die den besagten Vertrauenslevel-Grad berücksichtigen.

**Revendications**

1. Procédé de mise en oeuvre d'un système de communication sans fil à base de duplexage par répartition dans le temps comprenant les étapes consistant à établir, au niveau d'une station de base, une fonction d'application cartographique de mesure de ressources (RMMF), à obtenir à partir de ladite fonction RMMF, à partir à la fois de la valeur moyenne et de l'écart type du rapport signal reçu sur interférence (SIR) pour tous les utilisateurs et à partir d'estimations de conditions de charge et de niveaux d'interférence des canaux, une région de mesure de ressources (RMR) indiquant le nombre d'utilisateurs rencontrant une qualité de service acceptable, et décider, d'après la région (RMR), s'il faut admettre un appel nouvellement arrivant.

2. Procédé selon la revendication 1, dans lequel l'étape consistant à obtenir la région RMR comprend la prédiction de Kalman d'un vecteur d'interférence comprenant une valeur d'interférence prédite pour chaque utilisateur.

3. Procédé selon la revendication 2, dans lequel le vecteur d'interférence et son écart type sont utilisés pour prédire un nombre disponible d'utilisateurs.

4. Procédé selon l'une quelconque des revendications précédentes, dans lequel la région RMR indique si le fait d'avoir une qualité de service acceptable est au-dessus ou au-dessous d'une limite supérieure maximale et également si ledit nombre est au-dessus ou au-dessous d'une limite inférieure maximale.

5. Procédé selon la revendication 4, comprenant l'établissement d'un degré de niveau de confiance pour des utilisateurs en fonction de la distance du nombre total d'utilisateurs par rapport à ladite limite supérieure maximale et de la distance du nombre total d'utilisateurs par rapport à ladite limite inférieure maximale, et dans lequel l'étape consistant à décider s'il faut admettre un appel nouvellement arrivant comprend le fait de prendre en compte ledit degré de niveau de confiance.

6. Procédé selon l'une quelconque des revendications précédentes, dans lequel la fonction RMMF est établie d'après la moyenne et de l'écart type à la fois du taux d'erreur sur les bits (BER) et du rapport SIR.

7. Procédé selon la revendication 6, dans lequel les valeurs de rapport SIR sont mesurées sous la forme d'une séquence de valeurs de salve.

8. Procédé selon la revendication 7, dans lequel une valeur de taux BER est déterminée pour chaque valeur de salve de rapport SIR comme étant une fonction de celle-ci.

9. Procédé selon la revendication 7 ou 8, dans lequel la qualité de la liaison est estimée en appliquant de façon cartographique des paires de paramètres, chaque paire comprenant la moyenne et l'écart type du taux BER ou du rapport SIR, sur le rapport BER moyen.

10. Station de base utilisable dans un système de communication sans fil à base de duplexage par répartition dans le temps, la station de base comprenant un moyen destiné à établir une fonction d'application cartographique de mesure de ressources (RMMF), un moyen destiné à obtenir à partir de ladite fonction RMMF, à partir à la fois de la valeur moyenne et de l'écart type du rapport signal reçu sur interférence (SIR) pour tous les utilisateurs et à partir d'estimations de conditions de charge et de niveaux d'interférence des canaux, une région de mesure de ressources (RMR) indiquant le nombre d'utilisateurs rencontrant une qualité de service acceptable, et un moyen destiné à décider, d'après la région RMR, s'il faut admettre un appel nouvellement arrivant.

11. Station de base selon la revendication 10, dans laquelle le moyen destiné à obtenir la région RMR comprend un moyen pour une prédiction de Kalman d'un vecteur d'interférence comprenant une valeur d'interférence prédite pour chaque utilisateur.

12. Station de base selon la revendication 11, où la région RMR indique si le fait de rencontrer une qualité de service acceptable est au-dessus ou au-dessous d'une limite supérieure maximale et également si ledit nombre est au-dessus ou au-dessous d'une limite inférieure maximale et la station de base comprend un moyen destiné à établir un degré de niveau de confiance pour les utilisateurs en fonction de la distance du nombre total d'utilisateurs par rapport à ladite limite supérieure maximale et de la distance du nombre total d'utilisateurs par rapport à ladite limite inférieure maximale et dans où le moyen destiné à décider s'il faut admettre un appel nouvellement arrivant comprend un moyen prenant en compte ledit degré de niveau de confiance.

1. Estimate SIR and determine BER
for each burst with size of $n$

raw BER = function (SIR burst)

$$SIR_{burst} = [SIR_{burst}^1, \cdots, SIR_{burst}^i, \cdots, SIR_{burst}^{(m/n)}]$$
$$P_b = [P_{burst}^1, \cdots, P_{burst}^i, \cdots, P_{burst}^{(m/n)}]$$

2. Estimate mean and std. dev. of BER and SIR
for each set of bursts

$$\hat{\mu}_{BER} = [\hat{\mu}_{BER}^1, \cdots, \hat{\mu}_{BER}^i, \cdots, \hat{\mu}_{BER}^{(m/n)}]$$
$$\hat{\sigma}_{BER} = [\hat{\sigma}_{BER}^1, \cdots, \hat{\sigma}_{BER}^i, \cdots, \hat{\sigma}_{BER}^{(m/n)}]$$

$$\hat{\mu}_{SIR} = [\hat{\mu}_{SIR}^1, \cdots, \hat{\mu}_{SIR}^i, \cdots, \hat{\mu}_{SIR}^{(m/n)}]$$
$$\hat{\sigma}_{SIR} = [\hat{\sigma}_{SIR}^1, \cdots, \hat{\sigma}_{SIR}^i, \cdots, \hat{\sigma}_{SIR}^{(m/n)}]$$

3. Map BER & SIR parameters on average BER

average BER = function (mean & std. dev. of BER or SIR)

$$\overline{P}_b = [\overline{P}_{b1}, \cdots, \overline{P}_{bi}, \cdots, \overline{P}_{b(m/n)}]$$

4. Estimate link quality

Fig. 1

13

Fig. 2

## Resource Metric Estimation

**RMMF**

**Measurement**
- SIR (mean, variance)
- Interference (mean, variance)
- Traffic (arriving call)

**Kalman based Estimation & Prediction**

SIR mean

Raw BER measurement (mean & variance)

**Resource Metric Region (RMR)**

- Calculate & estimate resource based on *resource region decision criteria*
- Deliver the call admission decision

**Radio Resource Allocation (RRA) algorithm**

= function of (traffic, resource utilisation, service type, priority, long-term & short-term traffic variation, & system model)

Fig. 3

Fig.4

Single cell, uplink
W=3.84MHz
R1=60Kbps, R2=240Kbps
Pmax$_1$=5dBm, Pmax$_2$=20dBm
Pr$_{out}$=5%

Maximum aggregated data rate (Kbps)

1300
1250
1200
1150
1100
1050

Std. dev. of (Eb/Io)$_2$[dB], $\varepsilon_{\sigma 2}$

Std. dev. of (Eb/Io)$_1$[dB], $\varepsilon_{\sigma 1}$

Fig. 5

EP 1 550 340 B1

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. JORGUSESKI et al.** Radio Resource Allocation in Third-Generation Mobile Communication Systems. *IEEE Communications Magazine,* February 2001, 117-123
- **R. BEREZDIVIN et al.** Next-Generation Wireless Communication Concepts and Technologies. *IEEE Communication Magazine,* March 2002, 108-116

- **H. OLOFFSON et al.** Improved Interface between Link Level and System Level Simulation Applied to GSM. *Proceedings of IEEE ICUPC '97,* August 1997, 79-83
- **S. HAMALAINEN et al.** A Novel Interface between Link and System Level Simulations. *Proceedings of ACTS Summit 1997,* October 1997, 506-604
- **A. S. SAMPATH ; P. 5. KUMAR ; J. M. HOLTZMAN.** Power control and resource management for a multimedia CDMA wireless system. *Proc. IEEE PIMRC '95,* 1995